# EUROPEAN PATENT SPECIFICATION

(11) **EP 4 027 752 B1**
(45) Date of publication and mention of the grant of the patent: **28.08.2024**
(21) Application number: 19953768.9
(22) Date of filing: 20.12.2019
(51) Int. Cl.: H04W 88/08, H04W 92/04, H04W 80/00

(54) **5G BASE STATION DEPLOYED WITH UPF, AND DATA MESSAGE PROCESSING METHOD THEREFOR**
5G-BASISSTATION MIT EINGESETZTER UPF UND DATENNACHRICHTENVERARBEITUNGSVERFAHREN DAFÜR
STATION DE BASE 5G À UPF MISE EN OEUVRE, ET PROCÉDÉ DE TRAITEMENT DE MESSAGE DE DONNÉES ASSOCIÉ

(30) Priority: 25.11.2019 CN 201911162502
(43) Date of publication of application: 13.07.2022
(73) Proprietor: IPlook Networks Co., Ltd, Guangzhou, Guangdong 510663 (CN)
(72) Inventor: LV, Dong, Guangzhou, Guangdong 510663 (CN)
(74) Representative: Cabinet Laurent & Charras
(86) International application number: PCT/CN2019/127147
(87) International publication number: WO 2021/103224

(56) References cited:
- CN-A- 104 935 422
- CN-A- 109 151 817
- CN-A- 109 672 549
- CN-A- 110 012 437
- US-A1- 2019 045 568
- US-A1- 2019 215 740
- NOKIA ET AL: "Architecture and Protocols: Connectivity Service Solution for IAB", vol. RAN WG3, no. Athens, Greece; 20180226 - 20180302, 17 February 2018 (2018-02-17), XP051401628, Retrieved from the Internet <URL:http://www.3gpp.org/ftp/tsg%5Fran/WG3%5FIu/TSGR3%5F99/Docs/> [retrieved on 20180217]
- NOKIA ET AL: "Mobility for vertical LAN (deterministic) services (e.g. TSN)", vol. SA WG2, no. Sophia Antipolis; 20180820 - 20180824, 14 August 2018 (2018-08-14), XP051537041, Retrieved from the Internet <URL:http://www.3gpp.org/ftp/tsg%5Fsa/WG2%5FArch/TSGS2%5F128BIS%5FSophia%5FAntipolis/Docs/S2%2D188102%2Ezip> [retrieved on 20180814]
- HUAWEI: "Impacts of higher layer multi-connection for IIoT", vol. RAN WG3, no. Chengdu, China; 20181008 - 20181012, 29 September 2018 (2018-09-29), XP051529080, Retrieved from the Internet <URL:http://www.3gpp.org/ftp/tsg%5Fran/WG3%5FIu/TSGR3%5F101bis/Docs/R3%2D185811%2Ezip> [retrieved on 20180929]
- HUAWEI: "Impacts of higher layer multi-connection for IIoT", 3GPP DRAFT; R3-185811, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Chengdu, China; 20181008 - 20181012, 29 September 2018 (2018-09-29), Mobile Competence Centre ; 650, route des Lucioles ; F-06921 Sophia-Antipolis Cedex ; France, XP051529080
- HUAWEI, HISILICON: "Discussion on the Higher Layer Multi-Connectivity", 3GPP DRAFT; R2-1817508, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 December 2018 (2018-12-16), Mobile Competence Centre ; 650, route des Lucioles ; F-06921 Sophia-Antipolis Cedex ; France, pages 1 - 6, XP051481408

## Description

### TECHNICAL FIELD

The present invention relates to the technical field of mobile communication and, in particular, to a data message processing method for a 5th generation mobile communication (5G) base station deployed with a User Plane Function (UPF), and the 5G base station deployed with the UPF.

### BACKGROUND

In a 5G wireless network architecture, a next-generation NodeB (gNB) in a 5G network and a UPF of a 5G core (5GC) are carried by different hardware platforms and evolved using different techniques. The gNB is evolved in an x86+FPGA mode. An x86+FPGA platform is a general-purpose hardware platform which uses a general-purpose x86 processor as a central processing unit (CPU) and uses a field-programmable gate array (FPGA) as a core device to implement extension and interface functions. The 5GC is evolved in a network function virtualization (NFV)/software-defined network (SDN) mode.

To implement high-speed data forwarding, massive connections, and low latency, a great challenge to the gNB and the UPF of the 5GC is provided especially in an application scenario defined by the 5G network.

The 5G technologies are mainly applied to a vertical industry and a private network industry. An application of wireless communication to the vertical industry is greatly accelerated through a combination of mobile edge computing (MEC) with a data center of a local user.

In a Chinese patent application with Publication No. CN102640525A and titled "Managing a data network connection for mobile communications based on user location", a method is described which is used for unloading a message at an application layer of a base station and a core network according to an Internet Protocol (IP) of a user.

In a Chinese patent application with Publication No. CN105634980A and titled "Data message processing method and base station", a data message processing method is added to a base station, where when identifying a message to be processed, the base station directly unloads the message, strips an outer tunnel message off, and directly forwards user data to a public network.

In a Chinese patent application with Publication No. CN107333267A and titled "Edge computing method for 5G ultra-dense networking scene", an MEC server is deployed near 5G small cells in a ultra-dense network so that an edge server is provided.

NOKIA ET AL: "Architecture and Protocols: Connectivity Service Solution for IAB", 3GPP DRAFT; R3-180994, XP051401628 discloses an IAB node (e.g., a gNB, eNB) with co-located gNB, UE and UPF.

The existing art has the disadvantages below.
(1) In an existing 5G wireless communication network architecture, the gNB and the 5GC are deployed independently. The gNB is deployed using dedicated hardware in an area near a user, and the 5GC is deployed using an NFV/SDN platform. The hardware deployed in the 5GC is generally an x86 processor platform. According to Release15 defined by the 3rd Generation Partnership Project (3GPP), the 5GC and the gNB are respectively based on independent hardware system architectures, and the two large systems are interconnected by an N1/N2/N3 interface and independent of each other. Deployed hardware resources/network resources are independently allocated.
(2) As for current MEC in a 5G wireless communication network, the wireless communication has not been well combined with the function of a UPF in a core network, which are greatly isolated in terms of a physical deployment distance or a logical deployment distance. As a result, the implementation of the MEC in an actual network is affected and the subsequent application of the wireless communication of 5G network with the function of MEC to the vertical industry is affected.
(3) Especially in a method for MEC in the 5G network, more attention is paid to functions, for example, basic functions such as unloading user plane data and user plane charging. High performance in unloading/charging/forwarding and the merging of a base station and a 5GC GTP-U (one of GPRS Tunnelling Protocol (GTP) protocols for transferring user data within a General Packet Radio Service (GPRS) core network and between a radio access network and a core network) data plane module are not actually taken into consideration.

### SUMMARY

In view of this, to solve the problems in the existing art, the present invention provides a 5G base station deployed with a UPF and a data message processing method therefor. A UPF of a 5GC is sunk and deployed on the gNB so that a network is more flattened and decentralized, a 5G base station and a 5G core network are deployed and installed more easily, which brings great convenience and safety to the operation and maintenance of the 5GC.

The features of the method and the 5G base station according to the present invention are defined in the appended independent claims. Further improvements are provided in the appended dependent claims.

In a first aspect, the present invention provides a 5G base station deployed with a UPF, which includes a hardware platform, the UPF, a logic unit, and a function unit.

The hardware platform is an x86/FPGA platform and configured to externally perform data interaction with a user terminal through an air interface and with the Internet through a network port and internally be connected to the logic unit and the UPF.

The UPF is deployed on the 5G base station and configured to perform data interaction with the hardware platform and the logic unit separately.

The logic unit is configured to perform radio resource management, implement an algorithm for the radio resource management, control radio resources, and process Packet Data Convergence Protocol (PDCP) user data.

The function unit is configured to perform, on a data message, processing including, but not limited to, classification, edge computing, application service platform processing, and charging call detail record (CDR) interface processing.

Further, the logic unit includes a PDCP module configured to process a received data message according to a PDCP protocol.

Further, the logic unit further includes a base station GTP-U codec configured to perform GTP-U tunnel encoding or decapsulation on the data message.

Further, the UPF includes a core network GTP codec configured to perform encapsulation or decoding on the data message.

Further, the function unit includes a classification module, a classification rule generator, an MEC module, and a charging CDR statistics module.

The classification rule generator is configured to edit and generate a classification rule of the data message.

The classification module is configured to receive the data message from the PDCP module or the UPF and classifies the data message according to the classification rule generated by the classification rule generator.

The MEC module is configured to perform the edge computing on the data message.

The charging CDR statistics module is configured to perform the charging CDR interface processing on the data message.

In a second aspect, the present invention provides a data message processing method for a 5G base station deployed with a UPF. The method includes steps for processing an uplink data message and steps for processing a downlink data message.

The steps for processing the uplink data message are described below.

In step S101, a Layer 2 (L2) physical layer of a hardware platform receives a data message from a user terminal through a wireless air interface, processes the data message, and sends the processed data message to a PDCP module.

In step 5102, the PDCP module receives the data message, processes the data message according to a PDCP protocol, and sends the processed data message to a base station GTP codec.

In step S103, the base station GTP codec receives the data message, performs GTP-U tunnel encoding on the received data message, sends the processed data message to an N3 interface module of the base station which performs network interface protocol processing and sends the processed data message to a core network GTP codec through an N3 network interface unit of a 5GC.

In step S104, the N3 network interface unit of the 5GC receives a GTP-U data message from the 5G base station and the core network GTP codec decodes the received data message to obtain a data message of an inner (IP) and sends the data message of the inner IP to the UPF.

In step S105, the UPF performs quality of service (QoS) processing, normal charging processing, and Packet Forwarding Control Protocol (PFCP) node management processing on the data message and reports management information and new status information generated based on the data message to a Session Management Function (SMF) of the 5GC through an N4 interface; and an interface module of the UPF sends the data message to the hardware platform through an N6 interface.

In step S106, the hardware platform performs network layer processing according to a requirement of the N6 interface and sends the data message to a network side through an Ethernet network interface.

The steps for processing the downlink data message are described below.

In step S201, the hardware platform receives a data message from the network side, sends the data message to an N6 network interface unit of the 5GC for network protocol processing, and sends the data message to the UPF of the 5GC.

In step S202, the UPF receives the data message, performs the QoS processing, the normal charging processing, and the PFCP node management processing on the data message, reports management information and new status information generated based on the data message to the SMF of the 5GC through the N4 interface so that the SMF of the 5GC sends the data message to the core network GTP codec of the 5GC.

In step S203, the core network GTP codec receives the data message, performs GTP-U encapsulation on the received data message and sends the data message to the interface module of the UPF, and the interface module sends the data message to the base station GTP codec through an N3 interface.

In step S204, the base station GTP codec receives the data message through the N3 interface, performs GTP-U decapsulation on the received data message to obtain an independent IP data message, and sends the independent IP data message to the PDCP module.

In step S205, the PDCP module receives the IP data message, processes the IP data message according to the PDCP protocol, and sends the processed IP data message to the L2 physical layer of the hardware platform.

In step S206, the L2 physical layer of the hardware platform processes the data message and sends the data message to the user terminal through an air interface.

In a third aspect, the present invention provides a data message processing method for a 5G base station deployed with a UPF. The method includes steps for processing an uplink data message and steps for processing a downlink data message.

The steps for processing the uplink data message are described below.

In step S 101', an L2 physical layer of a hardware platform receives a data message from a user terminal through a wireless air interface, processes the data message, and sends the processed data message to a PDCP module.

In step S 102', the PDCP module receives the data message, processes the data message according to a PDCP protocol, and sends the processed data message to the UPF.

In step S103', the UPF receives the data message, performs QoS processing, normal charging processing, and PFCP node management processing on the received data message, and reports management information and new status information generated based on the data message to an SMF of a 5GC through an N4 interface; and an interface module of the UPF sends the data message to the hardware platform through an N6 interface.

In step S 104', the hardware platform performs network layer processing according to a requirement of the N6 interface and sends the data message to a network side through an Ethernet network interface.

The steps for processing the downlink data message are described below.

In step S201', the hardware platform receives a data message from the network side and sends the data message to the UPF.

In step S202', the UPF receives the data message, performs the QoS processing, the normal charging processing, and the PFCP node management processing on the data message, reports management information and new status information generated based on the data message to the SMF of the 5GC through the N4 interface so that the SMF of the 5GC sends the data message to the PDCP module.

In step S203', the PDCP module receives the data message through an N3 interface, processes the data message according to the PDCP protocol, and sends the processed data message to the L2 physical layer of the hardware platform.

In step S204', the L2 physical layer of the hardware platform processes the data message and sends the data message to the user terminal through an air interface.

In the third aspect, the preceding data message processing method for a 5G base station deployed with a UPF further includes a classification step and a computing and charging step.

The classification step includes that a classification module receives an uplink data message from the PDCP module or a downlink data message from the UPF, classifies the received data message according to a classification rule generated based on a classification rule generator, and returns the data message to the corresponding PDCP module or UPF.

The computing and charging step includes that a computing and charging module receives a data message from at least one of the PDCP module, the UPF, and the classification module, performs MEC or charging CDR interface processing on the data message, and returns the data message to the corresponding PDCP module, UPF or classification module.

Further, the classification rule generator sends the classification rule to the classification module after editing and generating the classification rule.

In the present invention, the UPF is deployed on the 5G base station for the purposes below.
(1) The hardware platform of the gNB in the 5G network is used so that full use is made of surplus hardware resources of the 5G base station, the utilization of hardware resources is enhanced, and full use is indirectly made of the power of the base station, thereby reducing the power consumption of the 5GC.
(2) Through such deployment, a GTP-U data plane tunnelling module of the N3 interface can be omitted, which greatly increases the processing speed of a user data module, reduces the overhead of an existing hardware platform of the UPF, and saves hardware resources. At the same time, GTP-U tunnelling is reduced and GTP-U encapsulation or decapsulation does not need to be performed on an IP message, thereby saving the delay and jitter of user data.
(3) The UPF is deployed by the method on the hardware platform of the gNB so that user plane data is unloaded locally, and interfaces required for the MEC and the like are provided in a very friendly and rich manner. The UPF of the 5GC is deployed where the gNB is deployed so that the capabilities of applications such as MEC are provided. A user can initiate the MEC and service applications according to the actual situations of the applications.
(4) The UPF of the 5GC is deployed by the method on the hardware platform of the gNB so that a deployment model of the UPF of the 5GC is completely changed from a centralized manner to a distributed manner.

Meanwhile, the 5G base station deployed with the UPF of the present invention also has a user plane data unloading function and an MEC user plane unloading function mentioned in the existing art.

### BRIEF DESCRIPTION OF DRAWINGS

FIG. 1 is a structural diagram of hardware on which a 5G base station and a 5GC are deployed in the existing art;
FIG. 2 is a schematic diagram of a wireless network architecture;
FIG. 3 is a structural diagram of a UPF of a 5GC being deployed on a hardware platform of a base station according to embodiment one of the present invention;
FIG. 4 is a flowchart of data message processing according to embodiment one of the present invention; and
FIG. 5 is a flowchart of optimized data message processing according to the present invention.

### DETAILED DESCRIPTION

Embodiments of the present disclosure are described below in detail in conjunction with drawings. The implementation of the present disclosure is described below through specific embodiments. Those skilled in the art can easily understand other advantages and benefits of the present disclosure from the content described in the specification. Apparently, the described embodiments are merely part, not all, of embodiments of the present disclosure. The present disclosure may also be implemented or applied through other different specific embodiments, and various modifications or variations may be made to the details in the specification on the basis of different opinions and applications without departing from the present disclosure. It is to be noted that if not in collision, the embodiments described hereinafter and features therein may be combined with each other. Based on the embodiments described herein, all other embodiments obtained by those of ordinary skill in the art without creative work are within the scope of the present disclosure.

In the 3G period, a serving GPRS support node (SGSN) and a gateway GPRS support node (GGSN) are dedicated network devices, and a 3G base station is customized with dedicated hardware. Each vendor has its own hardware system. In actual deployment, the 3G base station and a 3G core network are separately purchased, and there is no solution for the 3G base station and the data plane SGSN/GGSN integration of the 3G core network.

In the 4G period, a network flattening/IP-based design and a paravirtualization design of a 4G core network are used. A 4G base station is involved in part of functions of unloading a GTP-U data plane, which are similar to the solution described in a Chinese patent application with Publication No. CN105634980A.

In the present invention, a UPF of a 5GC is deployed as a whole on a hardware platform of the gNB, so as to implement all functions in CN105634980A with many advantages and characteristics that CN105634980A does not have.

### Embodiment one

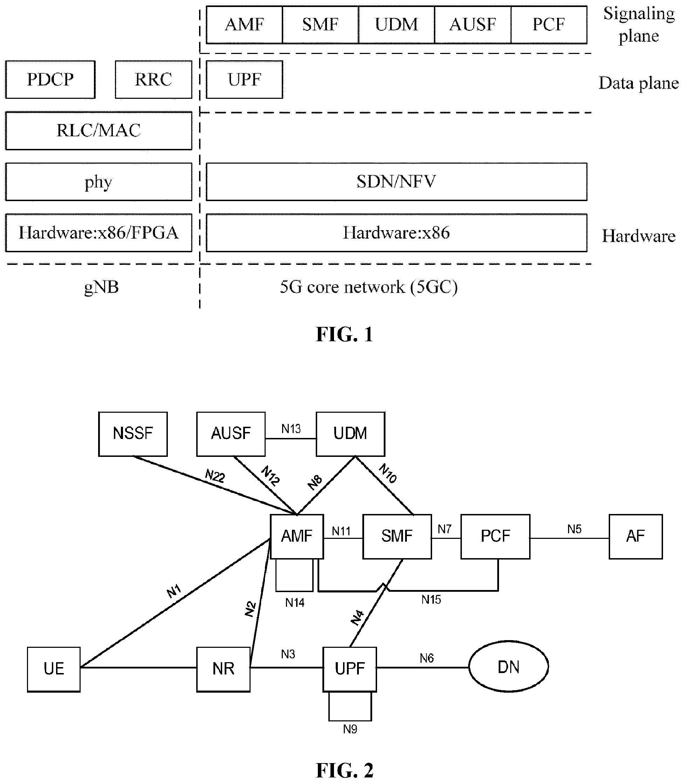

A 5GC mainly includes network elements shown in FIG. 2: a network slicing/selection function (NSSF), an authentication server function (AUSF), unified data management (UDM), an access and mobility management function (AMF), a Session Management Function (SMF), a User Plane Function (UPF), a Policy Control Function (PCF), the gNB, and a 5G user equipment (UE).

This embodiment provides a 5G base station deployed with the UPF. the UPF of the 5GC is deployed on the gNB, so as to fully utilize x86/FPGA dedicated computing platform resources of the gNB to carry the UPF of the 5GC.

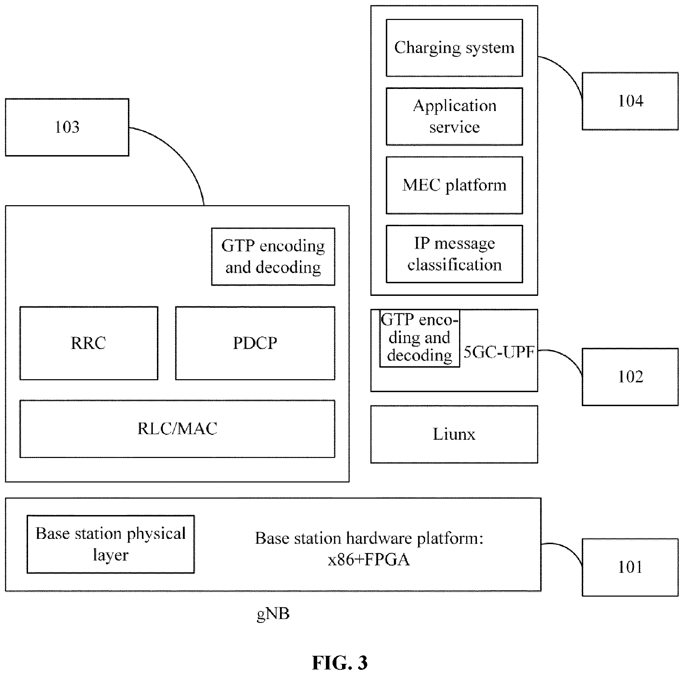

As shown in FIG. 3, a hardware platform 101, a UPF 102, a logic unit 103, and a function unit 104 are included.

In the present invention, the component 101 is a basic hardware platform x86/FPGA of the 5G base station and configured to externally perform data interaction with the 5G UE through an air interface and with the Internet through a network port and internally be connected to a PDCP/RRC protocol layer module in the logic unit 103 and the UPF. The x86 is configured to load the PDCP/RRC protocol layer module of the gNB and the UPF of the 5GC, and the FPGA is mainly configured to load a physical layer algorithm of the gNB and responsible for implementing a basic algorithm of radio resource allocation.

The component 102 is the UPF of the 5GC, the key of the present invention. The UPF is deployed on the 5GC base station and configured to perform data interaction with the hardware platform 101 and the logic unit 103 separately. The UPF has the same function as it is deployed on an independent x86 hardware platform and has a main difference in performance.

Main functions of the UPF include the allocation and release of a local communication session endpoint identifier (SEID), N3 interface GTP-U protocol processing, GTP-U error indication processing, N6 interface data packet routing and forwarding, packet cache notification and session monitoring, a Redis data interaction interface, a packet forwarding function between the UPF and a control plane interface, a user port control (UPC) operations administration and maintenance (OAM) configuration, UPC- UE parameter update (UPU) message transmission control, PFCP messaging interface / encoding and decoding / transmission control / session management, N4 interface packet rate of flow describe (PFD) management / association management / heartbeat / load / overload management / the support of an N3 / N4 / N9 / N6 / Nnrf interface, an intra-radio access technology (RAT) mobility anchor, and an inter-RAT mobility anchor, an external session point of a protocol data unit (PDU) interconnected to a data network, data packet routing and forwarding, user plane QoS processing, uplink traffic verification, uplink and downlink transmission level data packet labeling.

The component 103 is the logic unit of the gNB, operates on an x86/FPGA hardware platform of the base station, and implements the same functions and achieves the same performance as a common 5G base station. Functions of the logic unit include basic radio resource management and the implementation of an algorithm of the radio resource management through radio link control (RLC)/media access control (MAC) in L2 and the control of radio resources and the processing of PDCP user data through radio resource control (RRC)/PDCP in Layer 3 (L3).

The component 104 is the function unit after 102 is deployed on the component 101 and includes capability open platform interfaces such as IP message classification, an MEC platform, an application service platform, and a customized charging system interface CDR.

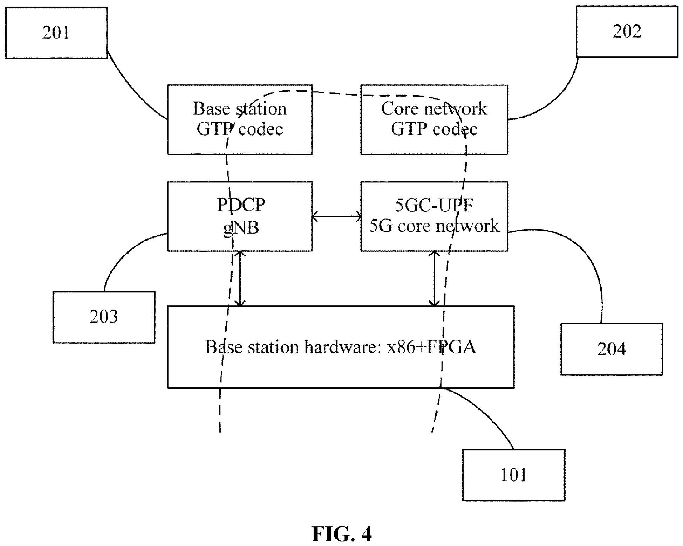

A data message processing flow corresponding to the 5G base station in this embodiment is shown in FIG. 4. Data message processing mainly depends on the following components of the 5G base station: the hardware platform 101, a PDCP module 203, a base station GTP codec 201, a core network GTP codec 202, and a UPF 204 of the 5GC. In actual deployment, the component 201 is a part of the component 203, and 201 and 203 are a part of 103 in FIG. 3; the component 202 is a part of the component 204, and 202 and 204 are combined into 102 in FIG. 3, which are shown separately for convenience of description.

A data message processing method in this embodiment includes steps for processing an uplink data message and steps for processing a downlink data message.

The steps for processing the uplink data message are described below.

In step S101, an L2 physical layer of the component 101 receives a data message from a mobile phone user terminal UE through a wireless air interface, processes the data message, and sends the processed data message to the component 203.

In step S102, the PDCP module 203 receives the data message, processes the data message according to a PDCP protocol, and sends the processed data message to the component 201.

In step S103, the component 201 performs GTP-U tunnel encoding on the processed data message and sends a GTP-U data message to an N3 interface module of the base station which performs network interface protocol processing and sends the processed data message to the component 202 through the N3 network interface unit of the 5GC.

In step S104, the N3 network interface unit of the 5GC receives the GTP-U data message from the 5Gbase station, and the component 202 receives the GTP-U data message, decodes the GTP-U data message to obtain a data message of an inner IP, and sends the data message of the inner IP to the component 204.

In step S105, the component 204 performs QoS processing, normal charging processing, and PFCP node management processing (such as a status/load/heartbeat) on the data message and reports management information and new status information generated by the data message to an SMF of the 5GC through an N4 interface; and an interface module of the UPF sends the data message to the component 101 through an N6 interface.

In step S106, the component 101 performs network layer processing according to a requirement of the N6 interface and sends the data message to a network side through an Ethernet network interface.

The steps for processing the downlink data message are described below.

In step S201, the component 101 receives a data message from an underlying network side and sends the data message to the UPF, the component 204, of the 5GC, where the data message is an IP data message from the N6 interface.

In step S202, the component 204 receives the data message, performs QoS processing, normal charging processing, and PFCP node management processing (such as a status/load/heartbeat) on the data message, reports management information and new status information generated based on the data message to the SMF of the 5GC through the N4 interface, and sends the data message to the component 202.

In step S203, the component 202 receives the data message, performs GTP-U encapsulation, and sends the data message to the interface module of the UPF of the 5GC, and the interface module sends the data message to the component 201 through an N3 interface.

In step S204, the component 201 receives the data message through the N3 interface, performs GTP-U decapsulation on the received data message to obtain an independent IP data message, and sends the independent IP data message to the component 203.

In step S205, the component 203 receives the IP data message, processes the IP data message according to the PDCP protocol, and sends the processed IP data message to the L2 physical layer of the hardware platform 101 of the gNB.

In step S206, the L2 physical layer of the hardware platform 101 processes the data message, that is, performs 5G radio resource management and the like, and sends the data message to a mobile phone user through an air interface.

### Embodiment two

Embodiment two is different from embodiment one in that in the data message processing method, the component 201, the component 202, and the steps of processing the data message by the component 201 and the component 202 are deleted, that is, the encoding and decoding processes of the base station GTP-U codec and the core network GTP-U codec are deleted, simplifying the N3 interface between the gNB and the UPF of the 5GC.

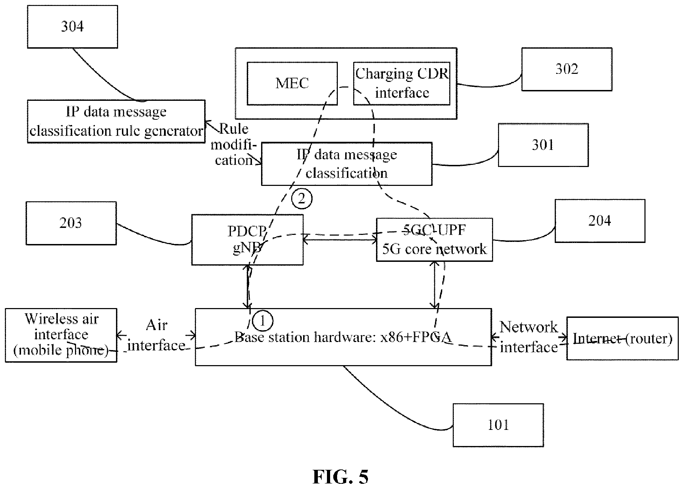

In this embodiment, a data message processing flow is shown by a dashed line ① in FIG. 5. Steps for an uplink data message are described below.

In step S101', an L2 physical layer of a component 101 receives a data message from a mobile phone user terminal UE through a wireless air interface, processes the data message, and sends the processed data message to a component 203.

In step S102', a PDCP module 203 receives the data message, processes the data message according to a PDCP protocol, and sends the processed data message to a component 204.

In step S103', the component 204 performs a QoS, normal charging, and PFCP node management (such as a status/load/heartbeat) of the data message and reports management information and new status information generated by the data message to an SMF of the 5GC through an N4 interface, and an interface module of the UPF sends the data message to the component 101 according to an N6 interface.

In step S104', the component 101 performs network layer processing according to a requirement of the N6 interface and sends the data message to a network side through an Ethernet network interface.

Steps for a downlink data message are described below.

In step S201', the component 101 receives a data message from an underlying network side and sends the data message to the UPF, the component 204, of the 5GC, where the data message is an IP data message from the N6 interface.

In step S202', the component 204 receives the data message, performs the QoS processing, the normal charging processing, and the PFCP node management processing (such as a status/load/heartbeat) on the data message, reports management information and new status information generated based on the data message to the SMF of the 5GC through the N4 interface, and sends the data message to the component 203.

In step S203', the component 203 receives the data message from the component 204 through the N3 interface, processes the data message according to the PDCP protocol, and sends the processed data message to the L2 physical layer of the hardware platform 101 of the gNB.

In step S204', the L2 physical layer of the hardware platform 101 processes the data message, that is, performs 5G radio resource management and the like, and sends the data message to a mobile phone user through an air interface.

In the 5G network, the deletion of a GTP data decapsulation function of the N3 interface between the gNB and the UPF greatly increases a processing speed of a 5G data plane and reduces a data plane processing delay and a data transmission jitter.

### Embodiment three

On the basis of embodiment two, a processing flow of a function unit is added, where the function unit includes a classification module 301, a classification rule generator 304, and a computing and charging module 302 composed of an MEC module and a charging CDR statistics module, which is a characteristic not included in 3GPP protocols and specifications.

The classification rule generator 304 is configured to edit and generate a classification rule of a data message.

The classification module 301 is configured to receive a data message from the component 203 or 204 and classifies the data message according to the classification rule generated by the classification rule generator 304.

The MEC module is configured to perform edge computing on the data message.

The charging CDR statistics module is configured to perform charging CDR interface processing on the data message.

A flow shown by a dashed line ② in FIG. 5 includes a classification step and a computing and charging step.

The classification step includes that the component 301 receives an uplink data message from a component 203 or a downlink data message from a component 204, classifies the received data message according to the classification rule generated by 304, and returns the data message to the corresponding component.

The component 304 edits the classification rule for the component 301 and sends the classification rule to the component 301. The component 301 executes the rule delivered by the component 304. The rule generated by the component 304 is presented based on applications required by a gNB in the 5G network, a UPF of a 5GC, and an SMF/AMF and special properties of a current interconnection application Over-the-Top (OTT).

The computing and charging step includes that the component 302 receives an IP data message from more than one of the component 203, the component 204, and the component 301, performs MEC or charging CDR interface processing, and returns the data message to the corresponding component, achieving current edge computing/special computing/dedicated data message classification and identification.

The above are merely intended to illustrate the implementation of the present invention and not to limit the present invention.

## Claims

1. A data message processing method for a 5G base station deployed with a User Plane Function, UPF (102, 204), comprising steps for processing an uplink data message and steps for processing a downlink data message;
wherein the steps for processing the uplink data message comprise:
in step S101, receiving, by a Layer 2, L2, physical layer of a hardware platform (101), a data message from a user terminal through a wireless air interface, processing the data message, and
sending the processed data message to a Packet Data Convergence Protocol, PDCP, module (203);
in step S102, receiving, by the PDCP module (203), the data message, processing the data message according to a PDCP protocol, and sending the processed data message to a base station GPRS Tunnelling Protocol, GTP-U, codec (201);
in step S103, receiving, by the base station GTP-U codec (201), the data message, performing GTP-U tunnel encoding on the received data message, sending the processed data message to an N3 interface module of the base station which performs network interface protocol processing and sends the processed data message to a core network GTP codec (202) through an N3 network interface unit of a 5G core network, 5GC;
in step S104, receiving, by the N3 network interface unit of the 5GC, a GTP-U data message from the 5G base station, and decoding, by the core network GTP codec (202), the received data message to obtain a data message of an inner Internet Protocol, IP, and sending the data message of the inner IP to the UPF (102, 204); **characterized by**:
in step S105, performing, by the UPF (102, 204), quality of service (QoS) processing, normal charging processing, and Packet Forwarding Control Protocol, PFCP, node management processing on the data message, and reporting management information and new status information generated based on the data message to a Session Management Function, SMF, of the 5GC through an N4 interface; and sending, by an interface module of the UPF (102, 204), the data message to the hardware platform (101) through an N6 interface; and
in step S106, performing, by the hardware platform (101), network layer processing according to a requirement of the N6 interface, and sending the data message to a network side through an Ethernet network interface;
wherein the steps for processing the downlink data message comprise:
in step S201, receiving, by the hardware platform (101), a data message from the network side, and sending the data message to the UPF (102, 204);
in step S202, receiving, by the UPF (102, 204), the data message, performing the QoS processing, the normal charging processing, and the PFCP node management processing on the data message, reporting management information and new status information generated based on the data message to the SMF of the 5GC through the N4 interface so that the SMF of the 5GC sends the data message to the core network GTP codec (202) of the 5GC;
in step S203, receiving, by the core network GTP codec (202), the data message, performing GTP-U encapsulation on the received data message, and sending the data message to the interface module of the UPF (102, 204), and forwarding, by the interface module, the data message to the base station GTP-U codec (201) of the 5G base station through an N3 interface;
in step S204, receiving, by the base station GTP-U codec (201), the data message through the N3 interface, performing GTP-U decapsulation on the received data message to obtain an independent IP data message, and sending the independent IP data message to the PDCP module (203);
in step S205, receiving, by the PDCP module (203), the IP data message, processing the IP data message according to the PDCP protocol, and sending the processed IP data message to the L2 physical layer of the hardware platform (101); and
in step S206, processing, by the L2 physical layer of the hardware platform (101), the data message, and sending the data message to the user terminal through an air interface.

2. A data message processing method for a 5G base station deployed with a User Plane Function, UPF (102, 204), comprising steps for processing an uplink data message and steps for processing a downlink data message;
wherein the steps for processing the uplink data message comprise:
in step S101', receiving, by a Layer 2, L2, physical layer of a hardware platform (101), a data message from a user terminal through a wireless air interface, processing the data message, and sending the processed data message to a Packet Data Convergence Protocol, PDCP, module (203);
in step S102',receiving, by the PDCP module (203), the data message, processing the data message according to a PDCP protocol, and sending the processed data message to the UPF 102 204); **characterized by**:
in step S103', receiving, by the UPF (102, 204), the data message, performing quality of service (QoS) processing, normal charging processing, and Packet Forwarding Control Protocol, PFCP, node management processing on the received data message, and reporting management information and new status information generated based on the data message to a Session Management Function, SMF, of a 5G core network, 5GC, through an N4 interface; and sending, by an interface module of the UPF (102, 204), the data message to the hardware platform (101) through an N6 interface; and
in step S104', performing, by the hardware platform (101), network layer processing according to a requirement of the N6 interface, and sending the data message to a network side through an Ethernet network interface;
wherein the steps for processing the downlink data message comprise:
in step S201', receiving, by the hardware platform (101), a data message from the network side, and sending the data message to the UPF (102, 204);
in step S202', receiving, by the UPF (102, 204), the data message, performing the QoS processing, the normal charging processing, and the PFCP node management processing on the data message, reporting management information and new status information generated based on the data message to the SMF of the 5GC through the N4 interface so that the SMF of the 5GC sends the data message to the PDCP module (203);
in step S203', receiving, by the PDCP module (203), the data message through an N3 interface, processing the data message according to the PDCP protocol, and sending the processed data message to the L2 physical layer of the hardware platform (101); and
in step S204', processing, by the L2 physical layer of the hardware platform (101), the data message, and sending the data message to the user terminal through an air interface.

3. The data message processing method according to claim 1 or 2, further comprising a classification step and a computing and charging step;
wherein the classification step comprises: receiving, by a classification module (301), an uplink data message from the PDCP module (203) or a downlink data message from the UPF (102, 204), classifying the received data message according to a classification rule generated based on a classification rule generator (304), and returning the data message to the corresponding PDCP module (203) or UPF (102, 204); and
wherein the computing and charging step comprises: receiving, by a computing and charging module (302), a data message from at least one of the PDCP module (203), the UPF (102, 204), and the classification module (301), performing mobile edge computing, MEC, or charging call detail record, CDR, interface processing on the data message, and returning the data message to the corresponding PDCP module (203), UPF (102, 204) or classification module (301).

4. The data message processing method according to claim 3, wherein the classification rule generator (304) sends the classification rule to the classification module (301) after editing and generating the classification rule.

5. A 5G base station deployed with a User Plane Function, UPF (102, 204), **characterized by** comprising a hardware platform (101), the UPF (102, 204), a logic unit (103), and a function unit (104); wherein
the hardware platform (101) is an x86/ Field Programmable Gate Array, FPGA, platform and configured to externally perform data interaction with a user terminal through an air interface and with the Internet through a network port and internally be connected to the logic unit (103) and the UPF (102, 204);
the UPF (102, 204) is deployed on the 5G base station and configured to perform data interaction with the hardware platform (101) and the logic unit (103) separately;
the logic unit (103) is configured to perform radio resource management, implement an algorithm for the radio resource management, control radio resources, and process Packet Data Convergence Protocol, PDCP, user data; and
the function unit (104) is configured to perform classification processing, edge computing processing, application service platform processing, and charging call detail record, CDR, interface processing on a data message;
wherein the 5G base station is configured to perform the steps of any of claims 1 or 2 to 4.

6. The 5G base station according to claim 5, wherein the logic unit (103) comprises a PDCP module (203) configured to process a received data message according to a PDCP protocol.

7. The 5G base station according to claim 6, wherein the logic unit (103) further comprises a base station GTP-U codec (201) configured to perform GTP-U tunnel encoding or decapsulation on the data message.

8. The 5G base station according to claim 7, wherein the UPF (102, 204) comprises a core network GPRS Tunnelling Protocol, GTP, codec (202) configured to perform encapsulation or decoding on the data message.

9. The 5G base station according to claim 6, wherein the function unit (104) comprises a classification module (301), a classification rule generator (304), a mobile edge computing, MEC, module, and a charging CDR statistics module; wherein
the classification rule generator (304) is configured to edit and generate a classification rule of the data message;
the classification module (301) is configured to receive the data message from the PDCP module (203) or the UPF (102, 204) and classifies the data message according to the classification rule generated by the classification rule generator;
the MEC module is configured to perform the edge computing on the data message; and
the charging CDR statistics module is configured to perform the charging CDR interface processing on the data message.

## Patentansprüche

1. Verfahren zum Verarbeiten von Datennachrichten für eine 5G-Basisstation, die mit einer User Plane Function, UPF (102, 204), eingesetzt wird, mit Schritten zum Verarbeiten einer Uplink-Datennachricht und Schritten zum Verarbeiten einer Downlink-Datennachricht;
wobei die Schritte zum Verarbeiten der Uplink-Datennachricht umfassen:
in Schritt S101, Empfangen einer Datennachricht, über eine physikalische Schicht vom Typ Layer 2, L2, einer Hardwareplattform (101), von einem Benutzerendgerät über eine drahtlose Funkschnittstelle, Verarbeiten der Datennachricht und Senden der verarbeiteten Datennachricht an ein Paketdatenkonvergenzprotokoll-Modul, PDCP, (203);
in Schritt S102, Empfangen der Datennachricht über das PDCP-Modul (203), Verarbeiten der Datennachricht gemäß einem PDCP-Protokoll und Senden der verarbeiteten Datennachricht an einen Basisstations-GPRS-Tunnelprotokoll- Codec (201), GTP-U;
in Schritt S103, Empfangen der Datennachricht über den Basisstations-GTP-U-Codec (201), Durchführen einer GTP-U-Tunnelkodierung der empfangenen Datennachricht, Senden der verarbeiteten Datennachricht an ein N3-Schnittstellenmodul der Basisstation, das die Verarbeitung des Netzschnittstellenprotokolls durchführt, und die verarbeitete Datennachricht über eine N3-Netzschnittstelleneinheit eines 5G-Kemnetzes, 5GC, an einen GTP-Codec (202) des Kernnetzes sendet;
in Schritt S104, Empfangen einer GTP-U-Datennachricht von der 5G-Basisstation über die N3-Netzschnittstelleneinheit des 5GC, und Dekodieren der empfangenen Datennachricht über den GTP-Codec (202) des Kernnetzes, um eine Datennachricht eines internen Internetprotokolls, IP, zu erhalten, und Senden der Datennachricht des internen IP an die UPF (102, 204); **gekennzeichnet durch**:
in Schritt S105, Ausführen, über die UPF (102, 204), einer Dienstgüte-Verarbeitung (QoS), einer normalen Gebührenverarbeitung und einer Knotenmanagement-Verarbeitung des Datenpaketweiterleitungs-Steuerungsprotokolls (PFCP) der Datennachricht, und Übermitteln von Managementinformationen und neuen Statusinformationen, die auf der Grundlage der Datennachricht erzeugt wurden, an eine Sitzungsmanagement-Funktion, SMF, des 5GC über eine N4-Schnittstelle, und Senden der Datennachricht an die Hardwareplattform (101) über eine N6-Schnittstelle durch ein Schnittstellenmodul der UPF (102, 204); und
in Schritt S 106, Durchführen einer Vermittlungsschichtverarbeitung durch die Hardwareplattform (101) gemäß einer Anforderung der N6-Schnittstelle, und Senden der Datennachricht an eine Netzseite über eine Ethernet-Netzwerkschnittstelle;
wobei die Schritte zum Verarbeiten der Downlink-Datennachricht umfassen:
in Schritt S201, Empfangen einer Datennachricht von der Netzseite über die Hardwareplattform (101) und Senden der Datennachricht an die UPF (102, 204);
in Schritt S202, Empfangen der Datennachricht über die UPF (102, 204), Durchführen der QoS-Verarbeitung, der normalen Gebührenverarbeitung und der PFCP-Knotenmanagement-Verarbeitung der Datennachricht, Übermitteln von Managementinformationen und neuen Statusinformationen, die auf der Grundlage der Datennachricht erzeugt wurden, an die SMF des 5GC über die N4-Schnittstelle, so dass die S1VIF des 5GC die Datennachricht an den GTP-Codec (202) des Kernnetzes des 5GC sendet;
in Schritt S203, Empfangen der Datennachricht über den GTP-Codec (202) des Kernnetzes, Durchführen einer GTP-U-Verkapselung der empfangenen Datennachricht und Senden der Datennachricht an das Schnittstellenmodul der UPF (102, 204) und Weiterleiten der Datennachricht über das Schnittstellenmodul an den Basisstations-GTP-U-Codec (201) der 5G-Basisstation über eine N3-Schnittstelle;
in Schritt S204, Empfangen der Datennachricht über die N3-Schnittstelle durch den Basisstations-GTP-U-Codec (201), Durchführen einer GTP-U-Entkapselung der empfangenen Datennachricht, um eine unabhängige IP-Datennachricht zu erhalten, und Senden der unabhängigen IP-Datennachricht an das PDCP-Modul (203);
in Schritt S205, Empfangen der IP-Datennachricht über das PDCP-Modul (203), Verarbeiten der IP-Datennachricht gemäß dem PDCP-Protokoll und Senden der verarbeiteten IP-Datennachricht an die physikalische Schicht L2 der Hardwareplattform (101); und
in Schritt S206, Verarbeiten der Datennachricht über die physikalische Schicht L2 der Hardwareplattform (101), und Senden der Datennachricht an das Benutzerendgerät über eine Funkschnittstelle.

2. Verfahren zum Verarbeiten von Datennachrichten für eine 5G-Basisstation, die mit einer User Plane Function, UPF (102, 204), eingesetzt wird, mit Schritten zum Verarbeiten einer Uplink-Datennachricht und Schritten zum Verarbeiten einer Downlink-Datennachricht;
wobei die Schritte zum Verarbeiten der Uplink-Datennachricht umfassen:
in Schritt S 101', Empfangen einer Datennachricht, über eine physikalische Schicht vom Typ Layer 2, L2, einer Hardwareplattform (101), von einem Benutzerendgerät über eine drahtlose Funkschnittstelle, Verarbeiten der Datennachricht und Senden der verarbeiteten Datennachricht an ein Paketdatenkonvergenzprotokoll-Modul, PDCP, (203);
in Schritt S102', Empfangen der Datennachricht über das PDCP-Modul (203), Verarbeiten der Datennachricht gemäß einem PDCP-Protokoll und Senden der verarbeiteten Datennachricht an die UPF (102, 204); **gekennzeichnet durch**:
in Schritt S 103', Empfangen der Datennachricht über die UPF (102, 204), Durchführen einer Dienstgüte-Verarbeitung (QoS), einer normalen Gebührenverarbeitung und einer Knotenmanagement-Verarbeitung des Datenpaketweiterleitungs-Steuerungsprotokolls (PFCP) der empfangenen Datennachricht, und Übermitteln von Managementinformationen und neuen Statusinformationen, die auf der Grundlage der Datennachricht erzeugt wurden, an eine Sitzungsmanagement-Funktion, SMF, eines SG-Kernnetzes, 5GC, über eine N4-Schnittstelle, und Senden der Datennachricht an die Hardwareplattform (101) über eine N6-Schnittstelle durch ein Schnittstellenmodul der UPF (102, 204); und
in Schritt S 104', Durchführen einer Vermittlungsschichtverarbeitung durch die Hardwareplattform (101) gemäß einer Anforderung der N6-Schnittstelle, und Senden der Datennachricht an eine Netzseite über eine Ethernet-Netzwerkschnittstelle;
wobei die Schritte zum Verarbeiten der Downlink-Datennachricht umfassen:
in Schritt S201', Empfangen einer Datennachricht von der Netzseite über die Hardwareplattform (101) und Senden der Datennachricht an die UPF (102, 204);
in Schritt S202', Empfangen der Datennachricht über die UPF (102, 204), Durchführen der QoS-Verarbeitung, der normalen Gebührenverarbeitung und der PFCP-Knotenmanagement-Verarbeitung der Datennachricht, Übermitteln von Managementinformationen und neuen Statusinformationen, die auf der Grundlage der Datennachricht erzeugt wurden, an die SMF des 5GC über die N4-Schnittstelle, so dass die SMF des 5GC die Datennachricht an das PDCP-Modul (203) sendet;
in Schritt S203', Empfangen der Datennachricht über eine N3-Schnittstelle durch das PDCP-Modul (203), Verarbeiten der Datennachricht gemäß dem PDCP-Protokoll und Senden der verarbeiteten Datennachricht an die physikalische Schicht L2 der Hardwareplattform (101); und
in Schritt S204', Verarbeiten der Datennachricht über die physikalische Schicht L2 der Hardwareplattform (101), und Senden der Datennachricht an das Benutzerendgerät über eine Funkschnittstelle.

3. Verfahren zum Verarbeiten von Datennachrichten nach Anspruch 1 oder 2, das ferner einen Klassifizierungsschritt und einen Schritt zur Abrechnung und Gebührenerfassung umfasst;
wobei der Klassifizierungsschritt umfasst: Empfangen, über ein Klassifizierungsmodul (301), einer Uplink-Datennachricht von dem PDCP-Modul (203) oder einer Downlink-Datennachricht von der UPF (102, 204), Klassifizieren der empfangenen Datennachricht gemäß einer Klassifizierungsregel, die auf der Grundlage eines Klassifizierungsregelgenerators (304) erzeugt wird, und Zurücksenden der Datennachricht an das entsprechende PDCP-Modul (203) oder die entsprechende UPF (102, 204); und
wobei der Schritt zur Abrechnung und Gebührenerfassung umfasst: Empfangen, über ein Abrechnungs- und Gebührenerfassungsmodul (302), einer Datennachricht von mindestens dem PDCP-Modul (203), der UPF (102, 204) und/oder dem Klassifizierungsmodul (301), das Durchführen von mobilem Edge Computing, MEC, oder Abrechnung von Gesprächsdatensätzen, CDR, Schnittstellenverarbeitung der Datennachricht und Zurücksenden der Datennachricht an das entsprechende PDCP-Modul (203), die UPF (102, 204) oder das Klassifizierungsmodul (301).

4. Verfahren zum Verarbeiten von Datennachrichten nach Anspruch 3, wobei der Klassifizierungsregelgenerator (304) die Klassifizierungsregel nach dem Bearbeiten und Erzeugen der Klassifizierungsregel an das Klassifizierungsmodul (301) sendet.

5. 5G-Basisstation, die mit einer User Plane Function, UPF (102, 204), eingesetzt wird, **dadurch gekennzeichnet, dass** sie eine Hardwareplattform (101), die UPF (102, 204), eine Logikeinheit (103) und eine Funktionseinheit (104) umfasst; wobei
die Hardwareplattform (101) eine x86/-FPGA-Plattform (Field Programmable Gate Array) ist und konfiguriert ist, um extern eine Dateninteraktion mit einem Benutzerendgerät über eine Funkschnittstelle und mit dem Internet über einen Netzwerkanschluss durchzuführen und intern mit der Logikeinheit (103) und der UPF (102, 204) verbunden zu werden;
die UPF (102, 204) in der 5G-Basisstation eingesetzt wird und so konfiguriert ist, dass sie die Dateninteraktion mit der Hardwareplattform (101) und der Logikeinheit (103) getrennt durchführt;
die Logikeinheit (103) so konfiguriert ist, dass sie ein Funkressourcenmanagement durchführt, einen Algorithmus für das Funkressourcenmanagement implementiert, die Funkressourcen steuert und die PDCP-Nutzerdaten (Packet Data Convergence Protocol) verarbeitet; und
die Funktionseinheit (104) so konfiguriert ist, dass sie eine Klassifizierungsverarbeitung, eine Edge-Computing-Verarbeitung, eine Anwendungsdienstplattform-Verarbeitung und eine Schnittstellenverarbeitung für die Abrechnung von Gesprächsdatensätzen, CDR, an einer Datennachricht durchführt;
wobei die 5G-Basisstation so konfiguriert ist, dass sie die Schritte nach einem der Ansprüche 1 oder 2 bis 4 durchführt.

6. 5G-Basisstation nach Anspruch 5, wobei die Logikeinheit (103) ein PDCP-Modul (203) umfasst, das so konfiguriert ist, dass es eine empfangene Datennachricht gemäß einem PDCP-Protokoll verarbeitet.

7. 5G-Basisstation nach Anspruch 6, wobei die Logikeinheit (103) ferner einen Basisstations-GTP-U-Codec (201) umfasst, der so konfiguriert ist, dass er eine GTP-U- Tunnelkodierung oder -entkapselung der Datennachricht durchführt.

8. 5G-Basisstation nach Anspruch 7, wobei die UPF (102, 204) einen Kemnetz-GPRS-Tunnelprotokoll-Codec, GTP, (202) umfasst, der so konfiguriert ist, dass er eine Verkapselung oder Dekodierung der Datennachricht vornimmt.

9. 5G-Basisstation nach Anspruch 6, wobei die Funktionseinheit (104) ein Klassifizierungsmodul (301), einen Klassifizierungsregelgenerator (304), ein MEC-Modul (Mobile Edge Computing), und ein CDR-Statistikmodul für die Abrechnung umfasst; wobei:
der Klassifizierungsregelgenerator (304) so konfiguriert ist, dass er eine Klassifizierungsregel der Datennachricht bearbeitet und erzeugt;
das Klassifizierungsmodul (301) so konfiguriert ist, dass es die Datennachricht von dem PDCP-Modul (203) oder der UPF (102, 204) empfängt, und die Datennachricht gemäß der vom Klassifizierungsregelgenerator erzeugten Klassifizierungsregel klassifiziert;
das MEC-Modul so konfiguriert ist, dass es das Edge-Computing der Datennachricht durchführt; und
das Abrechnungs-CDR-Statistikmodul so konfiguriert ist, dass es die Abrechnungs-CDR-Schnittstellenverarbeitung der Datennachricht durchführt.

## Revendications

1. Procédé de traitement de message de données pour une station de base 5G déployée avec une fonction de plan utilisateur, UPF (102, 204), comprenant des étapes pour traiter un message de données en liaison montante et des étapes pour traiter un message de données en liaison descendante ;
dans lequel les étapes de traitement du message de données en liaison montante comprennent :
à l'étape S 101, recevoir, par l'intermédiaire d'une couche physique de type couche 2, L2, d'une plate-forme matérielle (101), un message de données provenant d'un terminal utilisateur via une interface hertzienne sans fil, traiter le message de données, et envoyer le message de données traité à un module de protocole de convergence de données par paquets, PDCP, (203) ;
à l'étape S 102, recevoir, par l'intermédiaire du module PDCP (203), le message de données, traiter le message de données selon un protocole PDCP, et envoyer le message de données traité à un codec (201) de protocole de tunnellisation GPRS, GTP-U, de station de base ;
à l'étape S 103, recevoir, par l'intermédiaire du codec GTP-U de station de base (201), le message de données, effectuer un codage de tunnel GTP-U sur le message de données reçu, envoyer le message de données traité à un module d'interface N3 de la station de base qui effectue un traitement de protocole d'interface réseau et envoie le message de données traité à un codec GTP de réseau central (202) par l'intermédiaire d'une unité d'interface réseau N3 d'un réseau central 5G, 5GC ;
à l'étape S104, recevoir, par l'intermédiaire de l'unité d'interface réseau N3 du 5GC, un message de données GTP-U de la station de base 5G, et décoder, par l'intermédiaire du codec GTP de réseau central (202), le message de données reçu pour obtenir un message de données d'un protocole Internet, IP, interne, et envoyer le message de données de l'IP interne à l'UPF (102, 204) ; **caractérisé par** :
à l'étape S105, effectuer, par l'intermédiaire de l'UPF (102, 204), un traitement de qualité de service (QoS), un traitement de facturation normal et un traitement de gestion de noeud de protocole de commande de transfert par paquets sur le message de données, et rapporter des informations de gestion et de nouvelles informations d'état générées sur la base du message de données à une fonction de gestion de session, SMF, du 5GC via une interface N4 ; et envoyer, par l'intermédiaire d'un module d'interface de l'UPF (102, 204), le message de données à la plate-forme matérielle (101) via une interface N6 ; et
à l'étape S106, effectuer, par l'intermédiaire de la plate-forme matérielle (101), un traitement de couche de réseau selon une exigence de l'interface N6, et envoyer le message de données à un côté réseau via une interface de réseau Ethernet ;
dans lequel les étapes de traitement du message de données en liaison descendante comprennent :
à l'étape S201, recevoir, par l'intermédiaire de la plate-forme matérielle (101), un message de données à partir du côté réseau, et envoyer le message de données à l'UPF (102, 204) ;
à l'étape S202, recevoir, par l'intermédiaire de l'UPF (102, 204), le message de données, effectuer le traitement QoS, le traitement de facturation normal et le traitement de gestion de noeud de PFCP sur le message de données, rapporter des informations de gestion et de nouvelles informations d'état générées sur la base du message de données à la SMF du 5GC via l'interface N4 de sorte que le S1VIF du 5GC envoie le message de données au codec GTP de réseau central (202) du 5GC ;
à l'étape S203, recevoir, par l'intermédiaire du codec GTP de réseau central (202), le message de données, effectuer une encapsulation GTP-U sur le message de données reçu, et envoyer le message de données au module d'interface de l'UPF (102, 204), et transférer, par l'intermédiaire du module d'interface, le message de données au codec GTP-U de station de base (201) de la station de base 5G via une interface N3 ;
à l'étape S204, recevoir, par l'intermédiaire du codec GTP-U de station de base (201), le message de données via l'interface N3, effectuer une décapsulation GTP-U sur le message de données reçu pour obtenir un message de données IP indépendant, et envoyer le message de données IP indépendant au module PDCP (203) ;
à l'étape S205, recevoir, par l'intermédiaire du module PDCP (203), le message de données IP, traiter le message de données IP selon le protocole PDCP, et envoyer le message de données IP traité à la couche physique L2 de la plate-forme matérielle (101) ; et
à l'étape S206, traiter, par l'intermédiaire de la couche physique L2 de la plate-forme matérielle (101), et envoyer le message de données au terminal utilisateur via une interface hertzienne.

2. Procédé de traitement de message de données pour une station de base 5G déployée avec une fonction de plan utilisateur, UPF (102, 204), comprenant des étapes pour traiter un message de données en liaison montante et des étapes pour traiter un message de données en liaison descendante ;
dans lequel les étapes de traitement du message de données en liaison montante comprennent :
à l'étape S101', recevoir, par l'intermédiaire d'une couche physique de type couche 2, L2, d'une plate-forme matérielle (101), un message de données provenant d'un terminal utilisateur via une interface hertzienne sans fil, traiter le message de données, et envoyer le message de données traité à un module de protocole de convergence de données par paquets, PDCP, (203) ;
à l'étape S 102', recevoir, par l'intermédiaire du module PDCP (203), le message de données, traiter le message de données selon un protocole PDCP, et envoyer le message de données traité à l'UPF (102, 204) ; **caractérisé par** :
à l'étape S103', recevoir, par l'intermédiaire de l'UPF (102, 204), le message de données, effectuer un traitement de qualité de service (QoS), un traitement de facturation normale et un traitement de gestion de noeud de protocole de commande de transfert de paquets, PFCP, sur le message de données reçu, et rapporter des informations de gestion et de nouvelles informations d'état générées sur la base du message de données à une fonction de gestion de session, SMF, d'un réseau central 5G, 5GC, via une interface N4 ; et envoyer, par l'intermédiaire d'un module d'interface de l'UPF (102, 204), le message de données à la plate-forme matérielle (101) via une interface N6 ; et
à l'étape S 104', effectuer, par l'intermédiaire de la plate-forme matérielle (101), un traitement de couche de réseau selon une exigence de l'interface N6, et envoyer le message de données à un côté réseau via une interface de réseau Ethernet ;
dans lequel les étapes de traitement du message de données en liaison descendante comprennent :
à l'étape S201', recevoir, par l'intermédiaire de la plate-forme matérielle (101), un message de données à partir du côté réseau, et envoyer le message de données à l'UPF (102, 204) ;
à l'étape S202', recevoir, par l'intermédiaire de l'UPF (102, 204), le message de données, effectuer le traitement QoS, le traitement de facturation normal et le traitement de gestion de noeud de PFCP sur le message de données, rapporter des informations de gestion et de nouvelles informations d'état générées sur la base du message de données à la SMF du 5GC via l'interface N4 de sorte que la SMF du 5GC envoie le message de données au module PDCP (203) ;
à l'étape S203', recevoir, par l'intermédiaire du module PDCP (203), le message de données par l'intermédiaire d'une interface N3, traiter le message de données selon le protocole PDCP, et envoyer le message de données traité à la couche physique L2 de la plate-forme matérielle (101) ; et
à l'étape S204', traiter, par l'intermédiaire de la couche physique L2 de la plate-forme matérielle (101), et envoyer le message de données au terminal utilisateur via une interface hertzienne.

3. Procédé de traitement de message de données selon la revendication 1 ou 2, comprenant en outre une étape de classification et une étape de calcul et de facturation ;
dans lequel l'étape de classification comprend : une réception, par l'intermédiaire d'un module de classification (301), d'un message de données en liaison montante provenant du module PDCP (203) ou d'un message de données en liaison descendante provenant de l'UPF (102, 204), une classification du message de données reçu selon une règle de classification générée sur la base d'un générateur de règle de classification (304), et un renvoi du message de données au module PDCP (203) ou à l'UPF (102, 204) correspondant ; et
dans lequel l'étape de calcul et de charge comprend : une réception, par l'intermédiaire d'un module de calcul et de charge (302), d'un message de données provenant d'au moins l'un du module PDCP (203), de l'UPF (102, 204), et du module de classification (301), effectuer un calcul de périphérie mobile, MEC, ou un enregistrement de détail d'appel de facturation, CDR, un traitement d'interface sur le message de données, et renvoyer le message de données au module PDCP correspondant (203), à l'UPF (102, 204) ou au module de classification (301).

4. Procédé de traitement de message de données selon la revendication 3, dans lequel le générateur de règle de classification (304) envoie la règle de classification au module de classification (301) après avoir édité et généré la règle de classification.

5. Station de base 5G déployée avec une fonction de plan utilisateur, UPF (102, 204), **caractérisée en ce qu'**elle comprend une plate-forme matérielle (101), l'UPF (102, 204), une unité logique (103) et une unité de fonction (104) ; dans laquelle
la plate-forme matérielle (101) est une plate-forme x86/ à réseau de porte programmables, FPGA, et est configurée pour effectuer de manière externe une interaction de données avec un terminal utilisateur via une interface hertzienne et avec l'Internet via un port réseau et être connectée de manière interne à l'unité logique (103) et à l'UPF (102, 204) ;
l'UPF (102, 204) est déployée sur la station de base 5G et configurée pour effectuer une interaction de données avec la plate-forme matérielle (101) et l'unité logique (103) séparément ;
l'unité logique (103) est configurée pour effectuer une gestion de ressources radio, mettre en oeuvre un algorithme pour la gestion de ressources radio, commander les ressources radio et traiter les données utilisateur du protocole de convergence de données par paquets, PDCP ; et
l'unité de fonction (104) est configurée pour effectuer un traitement de classification, un traitement de calcul de périphérie, un traitement de plate-forme de service d'application, et un traitement d'interface d'enregistrement de détail d'appel de facturation, CDR, sur un message de données ;
dans lequel la station de base 5G est configurée pour effectuer les étapes de l'une quelconque des revendications 1 ou 2 à 4.

6. Station de base 5G selon la revendication 5, dans laquelle l'unité logique (103) comprend un module PDCP (203) configuré pour traiter un message de données reçu selon un protocole PDCP.

7. Station de base 5G selon la revendication 6, dans laquelle l'unité logique (103) comprend en outre un codec GTP-U de station de base (201) configuré pour effectuer un codage ou une décapsulation de tunnel GTP-U sur le message de données.

8. Station de base 5G selon la revendication 7, dans laquelle l'UPF (102, 204) comprend un codec de protocole de tunnellisation GPRS, GTP, de réseau central (202) configuré pour effectuer une encapsulation ou un décodage sur le message de données.

9. Station de base 5G selon la revendication 6, dans laquelle l'unité fonctionnelle (104) comprend un module de classification (301), un générateur de règle de classification (304), un module de calcul de périphérie mobile, MEC, et un module de statistiques CDR de facturation ; dans lequel :
le générateur de règle de classification (304) est configuré pour éditer et générer une règle de classification du message de données ;
le module de classification (301) est configuré pour recevoir le message de données à partir du module PDCP (203) ou de l'UPF (102, 204) et classifie le message de données selon la règle de classification générée par le générateur de règle de classification ;
le module MEC est configuré pour effectuer le calcul de périphérie sur le message de données ; et
le module de statistiques CDR de facturation est configuré pour effectuer le traitement d'interface CDR de facturation sur le message de données.
